# EUROPEAN PATENT APPLICATION

(11) **EP 4 386 596 A1**
(43) Date of publication of application: **19.06.2024**
(21) Application number: 21931940.7
(22) Date of filing: 08.09.2021
(51) Int. Cl.: G06F 21/56, G06F 21/53

(54) **METHOD AND DEVICE FOR DETECTING MALIGNANCY OF NON-PORTABLE EXECUTABLE FILE THROUGH EXECUTION FLOW CHANGE OF APPLICATION PROGRAM**

(30) Priority: 26.08.2021 KR 20210112880
(71) Applicant: Seculetter Co., Ltd., Sujeong-gu Seongnam-si, Gyeonggi-do 13453 (KR)
(72) Inventor: LIM, Cha Sung, Yongin-si Gyeonggi-do 16824 (KR); YANG, Seung Hwan, Anyang-si Gyeonggi-do 14046 (KR)
(74) Representative: Murgitroyd & Company
(86) International application number: PCT/KR2021/012194
(87) International publication number: WO 2023/027228

(57) **Abstract**

A method for detecting a maliciousness of a non-portable executable file according to the present invention includes the steps of: executing a non-portable executable file by running an application program corresponding to the non-portable executable file in a virtual environment; monitoring the execution of the application program; breaking the execution of the application program at a predetermined breakpoint during the monitoring of the execution of the application program; changing an executing flow of the application program in a breaking state of the execution of the application program and resuming the execution of the application program; and detecting a malicious behavior executed after resuming the execution of the application program.

## Description

### [Technical Field]

The present invention relates to a method and an apparatus for detecting maliciousness of a non-portable executable file, and more particularly, to a method and an apparatus for detecting maliciousness of a non-portable executable file by a behavior based inspection method.

### [Background Art]

With the widespread use of the Internet and wireless communication devices, the transmission routes of malicious software or malicious codes are diversifying, and the degree of damage caused by the malicious software or malicious codes is increasing every year. The malicious code refers to software which is intentionally designed to perform malicious activities such as destroying a system or leaking information against the will and the interests of the user. Types of the malicious codes include hacking tools such as virus, worm, Trojan, backdoor, logic bomb, or trap door, malicious spyware, and ad-ware. The malicious code causes various problems such as leakage of personal information such as user identification information (ID) and a password, target system control, file deletion/change, system destruction, service denial of application program/system, core data leakage, or other hacking program installation through a self-reproduction function or automatic propagation function, and the damage is very diverse and serious.

The advanced persistent threat (APT) attack, which has become a hot topic in recent years, continuously utilizes various types of malicious codes by applying a high level of attack techniques to allow an attacker to set a specific target and extract the targeted information. Specifically, in many cases, the APT attack is not detected in an initial invasion stage and non-portable executable (Non-PE) files including mainly malicious codes are widely used. This is because a program (for example, document creating program or image program) for executing the non-portable executable file basically has a certain level of security vulnerability and when the malicious code is included in the non-portable executable file, a variant malicious code may be easily generated according to the file change. Here, the "non-portable executable file" is a concept opposed to an portable executable (PE) file or an executable file and refers to a file which is not executed by itself. For example, the non-portable executable file may be document files such as a PDF file, a HWP file, a word file, and an excel file, image files such as a JPG file, video files, java script files, or HTML files.

As a method for inspecting the maliciousness of the non-portable executable file according to the related art, there is a signature based inspection method. This method is a method for inspecting whether the non-portable executable file has a signature of a malicious code. However, most malicious non-portable executable file includes the malicious code in a script such as a java script or a macro script or in some cases, encodes the script to avoid the diagnosis so that it is difficult to know which script exists in the non-portable executable file itself. Accordingly, it is almost impossible to appropriately inspect whether the non-portable executable file is malicious using the signature based inspection method of the related art.

As another method for inspecting whether the non-portable executable file is malicious, there is a behavior based inspection method. This method is a method which inspects whether the malicious behavior occurs by actually executing the non-portable executable file. However, the malicious code included in the non-portable executable file may be designed such that when a specific condition (for example, a version of the application program or an operating system environment) is not satisfied, no behavior occurs. Accordingly, in the case of the behavior based inspection method, the non-portable executable file needs to be executed in all versions of the application program and various operating system environments and the behavior needs to be observed. Therefore, it takes a long time to analyze and it is difficult to accurately determine whether it is malicious.

### [Disclosure]

### [Technical Problem]

A technical object to be achieved by the present invention is to provide a method and an apparatus for detecting maliciousness of a non-portable executable file which efficiently detect maliciousness of a non-portable executable file designed such that when a specific condition, such as a version of an application program or an operating system environment, is not satisfied, a malicious behavior does not occur.

The technical object to be achieved by the present invention is not limited to the above-mentioned technical objects, and other technical objects, which are not mentioned above, can be clearly understood by those skilled in the art from the following descriptions.

### [Technical Solution]

In order to achieve the technical object, according to an aspect of the present invention, a method for detecting maliciousness of a non-portable executable file includes the steps of: executing a non-portable executable file by running an application program corresponding to the non-portable executable file in a virtual environment; monitoring the execution of the application program; breaking the execution of the application program at a predetermined breakpoint during the monitoring of the execution of the application program; changing an executing flow of the application program in a breaking state of the execution of the application program and resuming the execution of the application program; and detecting a malicious behavior executed after resuming the execution of the application program.

In order to achieve the above-described technical objects, according to another aspect of the present invention, an apparatus for detecting maliciousness of a non-portable executable file includes an application program running unit which executes a non-portable executable file by running an application program corresponding to the non-portable executable file in a virtual environment; an application program executing flow changing unit which monitors an execution of the application program, breaks the execution of the application program at a predetermined breakpoint during the monitoring of the execution of the application program, changes the executing flow of the application program in a breaking state of the execution of the application program, and resumes the execution of the application program; and a malicious behavior detecting unit which detects a malicious behavior executed after resuming the execution of the application program.

### [Advantageous Effects]

According to the present invention described above, it is possible to effectively detect the maliciousness of a non-portable executable file designed such that when a specific condition such as a version of an application program or an operating system environment is not satisfied, a malicious behavior does not occur.

Effects of the present invention are not limited to the above-mentioned effects, and other effects, which are not mentioned above, can be clearly understood by those skilled in the art from the following descriptions.

### [Description of Drawings]

FIG. 1 is a block diagram of an apparatus for detecting a maliciousness of a non-portable executable file according to an exemplary embodiment of the present invention.
FIG. 2 is a flowchart of a method for detecting a maliciousness of a non-portable executable file according to an exemplary embodiment of the present invention.
FIG. 3 illustrates an example of an operation of changing an executing flow by changing a flag during a process of executing a HWP program.
FIG. 4 illustrates a result that a HWP program is continuously executed without being ended so that a malicious behavior is detected.
FIG. 5 illustrates an example of a malicious macro designed to identify feature information of a virtual environment which is being executed so that if it is a virtual environment, the malicious behavior is not conducted.
FIG. 6 illustrates an example of changing a screen size value stored in a register.
FIG. 7 illustrates an example of changing a value indicating whether there is a sound driver stored in a memory.

### [Best Mode]

Hereinafter, exemplary embodiments of the present invention will be described in detail with reference to the drawings. Substantially same components in the following description and the accompanying drawings may be denoted by the same reference numerals and redundant description will be omitted. Further, in the description of the exemplary embodiment, if it is considered that specific description of related known configuration or function may cloud the gist of the present invention, the detailed description thereof will be omitted.

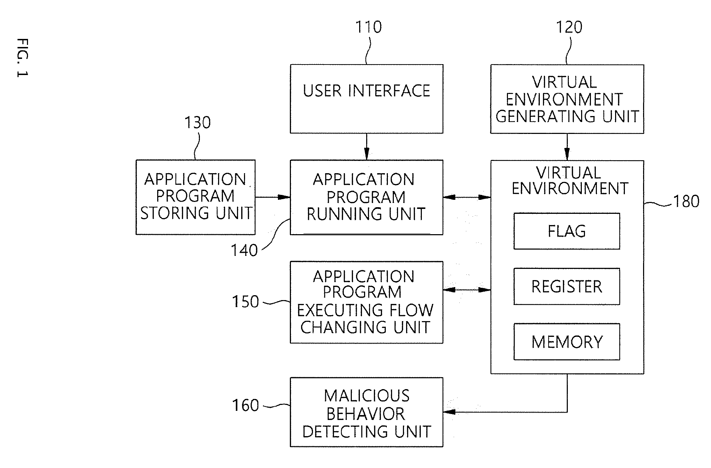

FIG. 1 is a block diagram of an apparatus for detecting a maliciousness of a non-portable executable file according to an exemplary embodiment of the present invention.

The apparatus for detecting a maliciousness of a non-portable executable file according to the exemplary embodiment includes a user interface 110, a virtual environment generating unit 120, an application program storing unit 130, an application program running unit 140, an application program executing flow changing unit 150, and a malicious behavior detecting unit 160.

The user interface 110 provides an interface to select a directory in which a non-portable executable file to be inspected is stored or a non-portable executable file.

The virtual environment generating unit 120 generates a virtual environment 180 in a computer environment in which the apparatus for detecting a maliciousness of the non-portable executable file according to the exemplary embodiment of the present invention is implemented. For example, the virtual environment 180 may be a well-known sandbox. The virtual environment 180 has a flag representing a process state, a register, and a memory.

The application program storing unit 130 stores various types of application programs to execute the non-portable executable file to be inspected. The application program storing unit 130 may store application programs such as acrobat reader, MS-word, Power point, Excel, HWP, an image viewer program, a video viewer program, or Internet Explorer.

The application program driving unit 140 determines a format of the non-portable executable file selected by the user interface 110 and selects an application program corresponding to the format of the non-portable executable file from the application program storing unit 130. The application program running unit 140 runs the selected application program in the virtual environment 180 to execute the non-portable executable file.

The apparatus for detecting the maliciousness of the non-portable executable file according to the exemplary embodiment of the present disclosure includes the application program executing flow changing unit 150 which detects the maliciousness of the non-portable executable file regardless of a specific condition such as a version of the application program or an operating system environment.

The malicious non-portable executable file may have branching points that terminates an application program or branches to a flow where no malicious behavior occurs if the specific condition such as the version of the application program or the operating system environment is not satisfied. The non-portable executable file is analyzed in advance by an analyzer to set a breakpoint at the branching point having this possibility. Therefore, a condition which is associated with the branching point to continuously execute the application program without terminating the application program or induce a flow that the malicious behavior occurs may be set.

The application program executing flow changing unit 150 monitors the execution of the application program and breaks the execution of the application program at the branching point set as a breakpoint during the monitoring of the execution of the application program. The application program executing flow changing unit 150 changes the executing flow of the application program to continuously execute the application program or generate a malicious behavior using the set condition and then resumes the execution of the application program. The application program executing flow changing unit 150 changes a process state, a register value, or a value of a specific address of the memory to change the executing flow of the application program at the branching point.

The malicious behavior detecting unit 160 monitors an executing process of the application program to detect the malicious behavior through a general behavior based inspecting method. The malicious behavior which is not detected if the executing flow of the application program is not changed appears because the executing flow of the application program is changed by the application program executing flow changing unit 150 so that the malicious behavior is detected by the malicious behavior detecting unit 160.

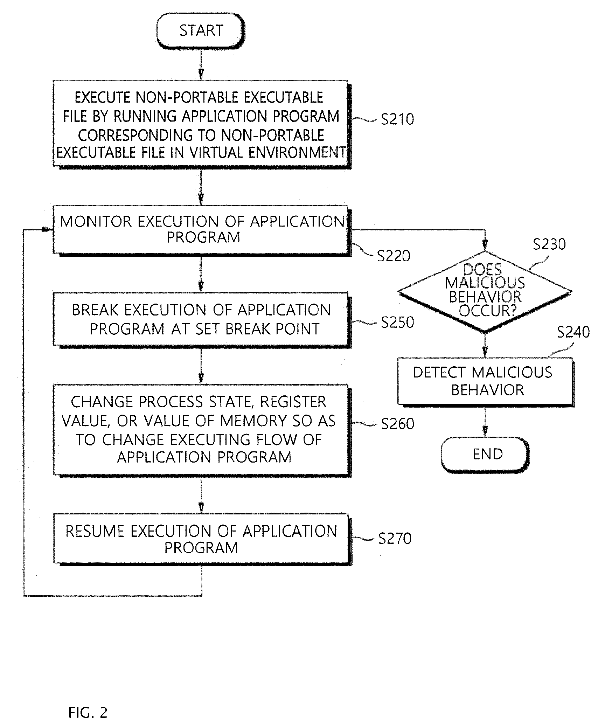

FIG. 2 is a flowchart of a method for detecting a maliciousness of a non-portable executable file according to an exemplary embodiment of the present invention.

In step 210, the application program driving unit 140 runs the application program corresponding to the non-portable executable file in the virtual environment 180 to execute the non-portable executable file.

In step 220, the application program executing flow changing unit 150 starts monitoring of the execution of the application program.

In step 250, the application program executing flow changing unit 150 breaks the execution of the application program at the set breakpoint.

In step 260, the application program executing flow changing unit 150 changes the process state, the register value, or the value of the specific address of the memory so as to change the executing flow of the application program.

In step 270, the application program executing flow changing unit 150 resumes the execution of the application program and continues to monitor the execution of the application program.

In the meantime, when the malicious behavior occurs in step 230 while monitoring the execution of the application program, the malicious behavior detecting unit 160 detects the malicious behavior in step 240.

When the malicious behavior is detected by the malicious behavior detecting unit 160, the apparatus for detecting a maliciousness of the non-portable executable file outputs a detection result that the corresponding non-portable executable file is malicious and ends the detecting process.

Even though the application program is executed along all executing flows which are branched from all set breakpoints, if the malicious behavior is not detected by the malicious behavior detecting unit 160, the apparatus for detecting the maliciousness of the non-portable executable file outputs the detection result that the corresponding non-portable executable file is not malicious and ends the detecting process.

An exemplary embodiment in which the application program executing flow changing unit 150 changes the process state to change the executing flow of the application program will be described as follows.

The process manages the process state by the data calculation during the executing process with information of a combination of switches which are flags. The flags have a value of 0 or 1 to serve as a switch. When the branching point is encountered during the process of executing the process, the branching is performed according to the value (0 or 1) of the switch identified from the instruction. For example, when two values are compared and the values are equal, a Zero Flag (ZF) is set to 1 and when two arbitrary values are added to exceed 4 bytes (based on a 32-bit operating system), Overflow Flag (OF) is set to 1. Thereafter, the executing flow is branched using a condition jump instruction so as to jump if ZF is 0 (JE, Jump if Equal) or jump if ZF is 1 (JNE, Jump if Not Equal).

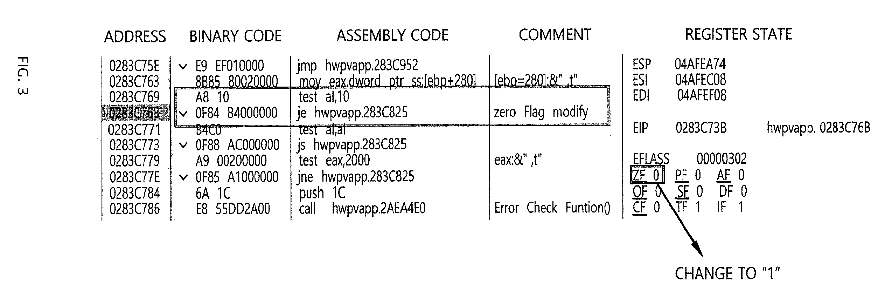

FIG. 3 illustrates an example of an operation of changing an executing flow by changing a flag during a process of executing a HWP program. Referring to FIG. 3, in the address 0283C769, a value of a register a1 is compared with 10 and a value of ZF (1 if they are equal, or 0 otherwise) indicating the process state of whether two values are equal is set to 0. In the address 0283C76B, if the previous comparison result is that two values are equal, an instruction to jump to a designated address 283C825 is executed. At this time, the value of ZF is identified to determine whether to jump. Here, if the comparison result is that two values are equal, it jumps to the address 283C825 to continuously execute the application program. However, if the comparison result is that two values are not equal, a next instruction is executed and as a result, the version of the application program does not match so that the application program is forcibly terminated. Accordingly, when the executing flow of the application program is left unchanged, the value of ZF is 0 so that the application program is terminated.

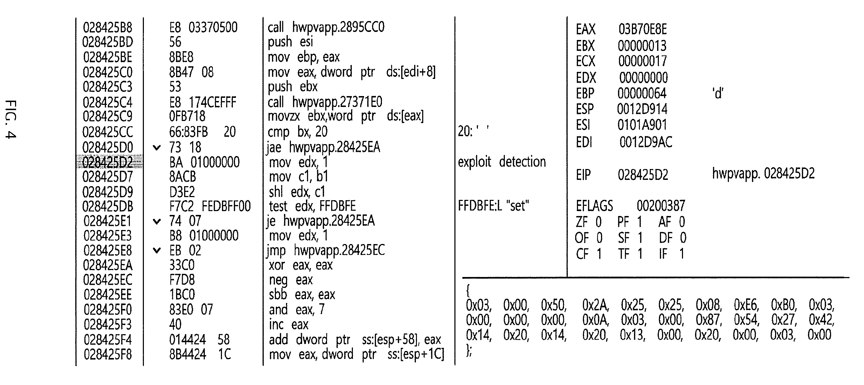

According to the exemplary embodiment of the present disclosure, a breakpoint is set to the address 0283C76B and the value of ZF is set to be changed to 1. When the value of ZF is changed to 1 in the breaking state and the execution of the application program is resumed, the procedure jumps to the address 283C825 according to the condition jump instruction to continuously execute the application program so that the malicious behavior occurs during the continuous execution of the application program. The malicious behavior is detected by the malicious behavior detecting unit 160. FIG. 4 illustrates a result that a HWP program is continuously executed without being ended so that a malicious behavior is detected. If the value of ZF is not changed, the application program is forcibly terminated so that the malicious behavior is not detected.

Even though in the present exemplary embodiment, an example that ZF is changed to change the process state is described, not only ZF, but also various flags such as Sign Flag (SF), Overflow Flag (OF), Auxiliary Carry Flag (AC), Carry Flag (CF) may be changed to change the process state.

According to the exemplary embodiment of the present invention, when the non-portable executable file has a logic that terminates the application program because the condition for operating the malicious behavior (for example, a version of the application program) is not satisfied, the application program is continuously executed by changing the process state at the branching point so that the operation of the malicious behavior may be accurately detected.

An exemplary embodiment in which the application program executing flow changing unit 150 changes a register value to change the executing flow of the application program will be described as follows.

A behavior based inspecting method which detects a suspicious behavior by executing the non-portable executable file performs the analysis in an isolated virtual environment to execute the malicious code. The virtual environment has unique feature information and a malicious code in the form of a highly created non-portable executable file may be designed to identify the feature information of the virtual environment to prevent the malicious behavior. For example, when a display size is smaller than a predetermined size, it is designed to be determined as a virtual environment so that the malicious behavior is not conducted or when a memory size is smaller than a predetermined size, it is designed to be determined as a virtual environment so that the malicious behavior is not conducted.

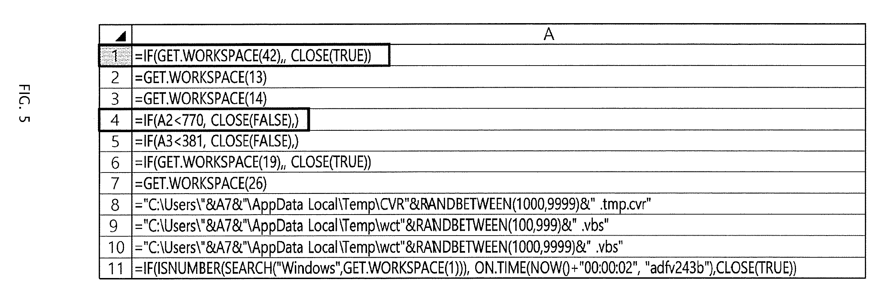

FIG. 5 illustrates an example of a malicious macro designed that feature information of a virtual environment which is being executed is identified using Excel 4.0 macro so that when the executing environment is not a virtual environment, the malicious behavior is conducted and when the executing environment is a virtual environment, the malicious behavior is not conducted.

Referring to FIG. 5, instructions of a second cell and a fourth cell are as follows.
A2 = GET.WORKSPACE(13)
A4 = IF(A2<770,CLOSE(FALSE),)

The instructions execute the instruction GET.WORKSPACE(13) in the cell A2 to get and store the size (a horizontal size) of the screen and in the cell A4, when the value A2 is smaller than 770, ends the macro by the instruction CLOSE. When the value A2 is not smaller than 770, a next instruction is continuously executed. A screen size of the virtual environment is generally smaller than 770 so that in the virtual environment, the macro ends according to the comparison result in the cell A4. Therefore, the maliciousness is not identified by a behavior based inspecting method of the related art.

In the exemplary embodiment of the present invention, the breakpoint is set in the address of the branching point corresponding to the cell A4 and the screen size value stored in the register is changed so that the macro is continuously executed without being ended to cause the malicious behavior.

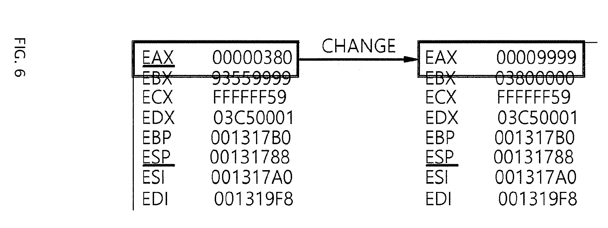

FIG. 6 illustrates an example of changing a screen size value stored in a register according to the exemplary embodiment of the present invention. The size of the screen taken through the instruction GET.WORKSPACE(13) is stored in the EAX register. Referring to FIG. 6, the screen size 0x380 in the virtual environment which is being executed is stored. Here, when the value of the EAX register is changed to a sufficiently large value, 0x9999, as a comparison result of the cell A4, the value of A2 is larger than 7700 so that a next instruction is continuously executed and the malicious behavior occurs.

Even though in the present exemplary embodiment, an example that the value of the EAX register is changed to change the executing flow of the application program has been described, not only the EAX register, but also values of various registers such as EBX register, ECX register, EDX register, ESI register, EDI register, EBP register, and ESP register are changed to change the executing flow of the application program.

According to the exemplary embodiment of the present disclosure, in the case of the non-portable executable file including a malicious macro having a logic which identifies an execution environment to end the macro when the condition is not satisfied, the value stored in the register is changed at the branching point so that the macro is continuously executed without being ended to accurately detect that the malicious behavior is conducted.

An exemplary embodiment in which the application program executing flow changing unit 150 changes a value of a specific address of a memory to change the executing flow of the application program will be described as follows.

Referring to FIG. 5 again, the instruction of the first cell is as follows.
A1 = IF(GET.WORKSPACE(42)"CLOSE(TRUE))

As a result of executing the instruction GET.WORKSPACE(42) to identify whether there is a sound driver, if there is a sound driver, a next instruction is continuously executed and if there is no sound driver, the macro is ended by the instruction CLOSE. In the virtual environment, there is no sound driver so that according to the result of executing the instruction GET.WORKSPACE(42) the macro ends. Accordingly, the behavior based inspecting method of the related art cannot determine the maliciousness.

In the exemplary embodiment of the present invention, the breakpoint is set in the address of the branching point corresponding to the cell A1 and a value indicating whether there is a sound driver stored in a specific address of the memory is changed so that the macro is continuously executed without being ended to cause the malicious behavior.

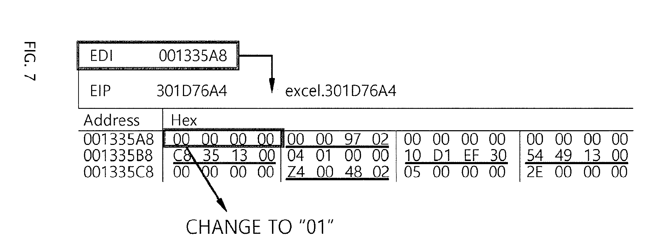

The instruction GET.WORKSPACE(42) gets the corresponding return value to store the return value in the EAX register and performs a predetermined operation (shr eax,1, and eax, 1) on the value stored in the EAX register to indicate the existence of the sound driver as a Boolean value and store the value in a memory address indicated by the EDI register. FIG. 7 illustrates that "0" indicating that there is no sound driver is stored in the address 001335A8 indicated by the EDI register. It is determined that if a value stored in the address 001335A8 is 0, there is no sound driver and if the value is 1, there is a sound driver. When the value of the address 00135A8 indicated by the EDI register is changed from 0 to 1, a next instruction is continuously executed and the malicious behavior may occur.

Even though in the present exemplary embodiment, an example that the value of the address indicated by the register EDI is changed to change the executing flow of the application program has been described, not only the register EDI, but also values of the addresses indicated by various registers such as the EAX register, the EBX register, the ECX register, the EDX register, the ESI register, the EBP register, and the ESP register are changed to change the executing flow of the application program.

As described above, according to the exemplary embodiment of the present disclosure, in the case of the non-portable executable file including a malicious macro having a logic which identifies an execution environment to end the macro when the condition is not satisfied, the value stored in the specific address of the memory is changed at the branching point so that the macro is continuously executed without being ended to accurately detect that the malicious behavior is conducted.

According to the above-described exemplary embodiments of the present disclosure, even in the case of the non-portable executable file designed such that when the execution condition is not satisfied, the malicious behavior is not generated, the process state, the value of the register, or the value stored in the memory is manipulated to cause the malicious behavior.

The combinations of blocks of the block diagrams and steps in the flowcharts of the present invention may be implemented by computer program instructions. The computer program instructions may be loaded in a processor of a general purpose computer, a special purpose computer, or other programmable data processing apparatus, so that the instructions executed via the processor of the computer or other programmable data processing apparatus create means for implementing the functions described in the blocks of the block diagrams or the steps in the flowcharts. These computer program instructions may also be stored in a computer-usable or computer readable memory that may direct a computer or other programmable data processing apparatus to function in a particular manner, so that the instructions stored in the computer usable or computer readable memory produce a manufacturing article including instruction means which implement the function indicated in the blocks of the block diagrams or the steps in the flowcharts. The computer program instructions may be loaded onto a computer or other programmable data processing apparatus to cause a series of operational steps to be performed on the computer or other programmable apparatus to produce a computer implemented process such that the instructions executed on the computer or other programmable apparatus provide steps for implementing the functions described in the blocks of the block diagrams or the steps in the flowcharts.

Each block or each step may represent a part of a module, a segment or a code, including one or more executable instructions for executing specific logical function(s). In addition, it should be noted that the functions mentioned in the blocks or steps may occur out of order in several alternative embodiments. For example, two blocks or steps shown in succession may be executed substantially concurrently, or may be executed in reverse order according to corresponding functions.

It will be appreciated that various exemplary embodiments of the present invention have been described herein for purposes of illustration, and that various modifications, changes, and substitutions may be made by those skilled in the art without departing from the scope and spirit of the present invention. Therefore, the exemplary embodiments of the present invention are provided for illustrative purposes only but not intended to limit the technical concept of the present invention. The scope of the technical concept of the present invention is not limited thereto. The protection scope of the present invention should be interpreted based on the following appended claims and it should be appreciated that all technical spirits included within a range equivalent thereto are included in the protection scope of the present invention.

## Claims

1. A method for detecting maliciousness of a non-portable executable file, comprising the steps of:
executing a non-portable executable file by running an application program corresponding to the non-portable executable file in a virtual environment;
monitoring the execution of the application program;
breaking the execution of the application program at a predetermined breakpoint during the monitoring of the execution of the application program;
changing an executing flow of the application program in a breaking state of the execution of the application program and resuming the execution of the application program; and
detecting a malicious behavior executed after resuming the execution of the application program.

2. The method for detecting maliciousness of a non-portable executable file of claim 1, wherein the breakpoint is set at a branching point.

3. The method for detecting maliciousness of a non-portable executable file of claim 1, wherein the executing flow of the application program is changed by changing a process state.

4. The method for detecting maliciousness of a non-portable executable file of claim 3, wherein the process state is changed by changing a flag indicating the process state.

5. The method for detecting maliciousness of a non-portable executable file of claim 4, wherein the flag includes at least one of Zero Flag (ZF), Sign Flag (SF), Overflow Flag (OF), Auxiliary Carry Flag (AC), and Carry Flag (CF).

6. The method for detecting maliciousness of a non-portable executable file of claim 1, wherein the executing flow of the application program is changed by changing a value of a register.

7. The method for detecting maliciousness of a non-portable executable file of claim 6, wherein the register includes at least one of the EAX register, the EBX register, the ECX register, the EDX register, the ESI register, the EDI register, the EBP register, and the ESP register.

8. The method for detecting maliciousness of a non-portable executable file of claim 1, wherein the execution of the application program is changed by changing a value of a specific address of the memory.

9. The method for detecting maliciousness of a non-portable executable file of claim 8, wherein the specific address of the memory is an address indicated by the EAX register, the EBX register, the ECX register, the EDX register, the ESI register, the EDI register, the EBP register, or the ESP register.

10. An apparatus for detecting maliciousness of a non-portable executable file, comprising:
an application program running unit which executes a non-portable executable file by running an application program corresponding to the non-portable executable file in a virtual environment;
an application program executing flow changing unit which monitors an execution of the application program, breaks the execution of the application program at a predetermined breakpoint during the monitoring of the execution of the application program, changes the executing flow of the application program in a breaking state of the execution of the application program, and resumes an execution of the application program; and
a malicious behavior detecting unit which detects a malicious behavior executed after resuming the execution of the application program.

11. The apparatus for detecting maliciousness of a non-portable executable file of claim 10, wherein the breakpoint is set at a branching point.

12. The apparatus for detecting maliciousness of a non-portable executable file of claim 10, wherein the executing flow of the application program is changed by changing a process state.

13. The apparatus for detecting maliciousness of a non-portable executable file of claim 12, wherein the process state is changed by changing a flag indicating the process state.

14. The apparatus for detecting maliciousness of a non-portable executable file of claim 13, wherein the flag includes at least one of Zero Flag (ZF), Sign Flag (SF), Overflow Flag (OF), Auxiliary Carry Flag (AC), and Carry Flag (CF).

15. The apparatus for detecting maliciousness of a non-portable executable file of claim 10, wherein the executing flow of the application program is changed by changing a value of a register.

16. The apparatus for detecting maliciousness of a non-portable executable file of claim 15, wherein the register includes at least one of the EAX register, the EBX register, the ECX register, the EDX register, the ESI register, the EDI register, the EBP register, and the ESP register.

17. The apparatus for detecting maliciousness of a non-portable executable file of claim 10, wherein the execution of the application program is changed by changing a value of a specific address of the memory.

18. The apparatus for detecting maliciousness of a non-portable executable file of claim 17, wherein the specific address of the memory is an address indicated by the EAX register, the EBX register, the ECX register, the EDX register, the ESI register, the EDI register, the EBP register, or the ESP register.
